# EUROPEAN PATENT APPLICATION

(11) **EP 4 773 083 A1**
(43) Date of publication of application: **08.07.2026**
(21) Application number: 24919145.3
(22) Date of filing: 30.12.2024
(51) Int. Cl.: G06T 13/40, G06F 3/01, G06F 3/04815, G06F 3/16, G06T 17/00

(54) **DIGITAL HUMAN SYSTEM APPLICATION METHOD AND APPARATUS**

(30) Priority: 08.11.2024 CN 202411593812
(71) Applicant: Nanchang Virtual Reality Research Institute Co., Ltd., Nanchang, Jiangxi 330000 (CN)
(72) Inventor: LUO, Zhiping, Nanchang, Jiangxi 330000 (CN); ZHOU, Jianguo, Nanchang, Jiangxi 330000 (CN)
(74) Representative: Metida
(86) International application number: PCT/CN2024/143738
(87) International publication number: WO 2026/097686

(57) **Abstract**

The present application provides a digital human system application method and apparatus, which specifically includes: connecting to a display device and launching a pre-stored digital human system through a startup script; acquiring three-dimensional model data and human motion data of a digital human in the digital human system; decomposing the three-dimensional model data and the human motion data into a plurality of processing tasks through a rendering engine, and transmitting the plurality of processing tasks to a preset graphics processing unit; and acquiring a digital human image generated by the graphics processing unit based on the plurality of processing tasks, and sending the digital human image to the display device. The present application helps to improve the application efficiency of the digital human system.

## Description

### TECHNICAL FIELD

The embodiments of the present application pertain to the field of Internet technologies, and in particular, to a digital human system application method and apparatus.

### BACKGROUND

A digital human system is a virtual character system constructed through deep learning and advanced algorithms. The digital human system possesses highly realistic appearance, voice, and movements, and can perform natural language interaction, understand complex contexts, and respond accordingly like a human.

However, existing digital human systems often heavily rely on large-scale computing devices, particularly servers equipped with high-performance graphics cards. Although servers can provide powerful data processing and graphics rendering capabilities, their inherent large volume and complex deployment environments limit the usage scenarios and flexibility of digital human systems. The complex deployment environments often significantly increase the manual setup and deployment steps for users. Therefore, simplifying the application process of digital human systems is an urgent problem to be solved.

### SUMMARY

The present application provides a digital human system application method and apparatus to address the technical problem of simplifying the application process of digital human systems.

According to a first aspect, an embodiment of the present application provides a digital human system application method applied to a portable device, where the digital human system application method includes:
connecting to a display device and launching a pre-stored digital human system through a startup script;
acquiring three-dimensional model data and human motion data of a digital human in the digital human system;
decomposing the three-dimensional model data and the human motion data into a plurality of processing tasks through a rendering engine, and transmitting the plurality of processing tasks to a preset graphics processing unit; and
acquiring a digital human image generated by the graphics processing unit based on the plurality of processing tasks, and sending the digital human image to the display device.

The embodiments of the present application provide beneficial effects in two aspects. First, connecting to the display device and launching the pre-stored digital human system through the startup script enables plug and play, as the pre-stored digital human system is launched upon connection to the display device. This plug-and-play manner helps to improve the usage speed of the digital human system. Second, acquiring the three-dimensional model data and the human motion data of the digital human in the digital human system, decomposing the three-dimensional model data and the human motion data into the plurality of processing tasks through the rendering engine, transmitting the plurality of processing tasks to the preset graphics processing unit, acquiring the digital human image generated by the graphics processing unit based on the plurality of processing tasks, and sending the digital human image to the display device reduce manual setup and deployment steps for users, thereby simplifying the application process of the digital human system and helping to improve the application efficiency of the digital human system.

In a possible implementation of the first aspect, the connecting to a display device and launching a pre-stored digital human system through a startup script includes:
acquiring, through an input/output interface, a hot-plug signal sent by the display device, where the input/output interface includes one or a combination of an HDMI interface, a USB interface, and an Ethernet interface;
establishing a data transmission channel between a portable device and the display device when the hot-plug signal is a high-level signal; and
launching the pre-stored digital human system through the startup script when the data transmission channel satisfies a preset condition.

In the embodiments of the present application, establishing the data transmission channel between the portable device and the display device ensures stable transmission of digital human images from the portable device to the display device, improving the efficiency and stability of digital human image transmission.

In a possible implementation of the first aspect, the launching the pre-stored digital human system through the startup script when the data transmission channel satisfies a preset condition includes:
acquiring a transmission delay duration of the data transmission channel, and launching the pre-stored digital human system through the startup script when the transmission delay duration is shorter than a preset delay duration in the preset condition;
or acquiring a transmission rate of the data transmission channel, and launching the pre-stored digital human system through the startup script when the transmission rate is greater than a preset rate in the preset condition.

In the embodiments of the present application, launching the pre-stored digital human system through the startup script when the data transmission channel satisfies the preset condition allows the digital human system to automatically avoid network congestion or unstable periods, effectively reducing adverse situations such as startup failures, data transmission interruptions, or delays caused by network issues, thereby enhancing the stability and reliability of the digital human system. From a user experience perspective, the transmission delay duration being less than the preset delay duration or the transmission rate being greater than the preset rate provides users with a smoother and faster data interaction experience, enhancing user satisfaction and loyalty.

In a possible implementation of the first aspect, the acquiring three-dimensional model data and human motion data of a digital human in the digital human system includes:
acquiring a first file and a second file of the digital human system; and
acquiring the three-dimensional model data of the digital human from the first file, and acquiring the human motion data of the digital human from the second file.

In the embodiments of the present application, the digital human can be reconstructed through the three-dimensional model data and human motion data, ensuring that the digital human's motion performance is fully consistent with the digital human system. This real-time feedback mechanism not only enhances user experience but also improves the interactivity and immersion of the digital human.

In a possible implementation of the first aspect, the decomposing the three-dimensional model data and the human motion data into a plurality of processing tasks through a rendering engine, and transmitting the plurality of processing tasks to a preset graphics processing unit includes:
combining the three-dimensional model data and the human motion data into rendering data; and
decomposing a rendering task of the rendering data into a plurality of processing tasks through the rendering engine, and transmitting the plurality of processing tasks to the preset graphics processing unit.

In the embodiments of the present application, the graphics processing unit possesses powerful parallel computing capabilities, with numerous processing units and a plurality of stream processors provided internally. When the plurality of processing tasks are simultaneously sent to the graphics processing unit, these processing tasks can be executed in parallel on a plurality of processing units of the graphics processing unit. This parallel processing approach significantly improves computational efficiency, enabling the processing tasks that would otherwise take a long time to be processed in a shorter time, thereby accelerating the overall workflow.

In a possible implementation of the first aspect, after the acquiring a digital human image generated by the graphics processing unit based on the plurality of processing tasks and sending the digital human image to the display device, the digital human system application method further includes:
collecting user speech and converting the user speech into first text information;
inputting the first text information into a deep learning model, and acquiring second text information output by the deep learning model based on the first text information; and
converting the second text information into response speech, and sending the response speech to the display device.

In the embodiments of the present application, in the digital era, users expect interactions with display devices to be more natural and smooth. Broadcasting the response speech through the display device not only responds to the user speech but also provides feedback in a more humanized manner, enhancing user engagement and immersion.

In a possible implementation of the first aspect, the inputting the first text information into a deep learning model and acquiring second text information output by the deep learning model based on the first text information includes:
acquiring a model file of the deep learning model, and loading the deep learning model from the model file through a loading script; and
inputting the first text information into the deep learning model to acquire the second text information output by the deep learning model based on the first text information. In the embodiments of the present application, the model file serves as a carrier of the deep learning model, containing network parameters and structural information optimized during a training process of the deep learning model. These parameters and structural information form the basis for the deep learning model to perform predictions and inferences. By loading the model file, the deep learning model can quickly restore the complete state of the model without requiring time-consuming retraining. This improves the convenience and efficiency of applying the deep learning model.

In a possible implementation of the first aspect, after the acquiring a digital human image generated by the graphics processing unit based on the plurality of processing tasks and sending the digital human image to the display device, the digital human system application method further includes:
acquiring an update command, acquiring update content from a server through the update command, and performing an update operation on the digital human system through the update content to obtain an updated digital human system.

In the embodiments of the present application, the updated digital human system typically possesses enhanced interaction capabilities. This includes more precise natural language processing technology, enabling the digital human to better understand users' intentions and emotions and provide more appropriate and humanized responses.

In a possible implementation of the first aspect, after the acquiring a digital human image generated by the graphics processing unit based on the plurality of processing tasks and sending the digital human image to the display device, the digital human system application method further includes:
acquiring a push instruction, and executing the push instruction to push the digital human image to a preset database.

In the embodiments of the present application, the push instruction is executed to push the digital human image to the preset database, where the database serves as a persistent storage medium of data, and enables long-term storage of the digital human image on a disk, ensuring that the digital human image is not lost even in the event of system power failure or crash. This persistent storage mechanism provides strong assurance for the long-term preservation and reliability of digital human images.

According to a second aspect, an embodiment of the present application provides a digital human system application apparatus, including:
a connection module configured to connect to a display device and launch a pre-stored digital human system through a startup script;
an acquisition module configured to acquire three-dimensional model data and human motion data of a digital human in the digital human system;
a transmission module configured to decompose the three-dimensional model data and the human motion data into a plurality of processing tasks through a rendering engine, and transmit the plurality of processing tasks to a preset graphics processing unit; and
a sending module configured to acquire a digital human image generated by the graphics processing unit based on the plurality of processing tasks, and send the digital human image to the display device.

The embodiments of the present application provide beneficial effects in two aspects. First, connecting to the display device and launching the pre-stored digital human system through the startup script enables plug and play, as the pre-stored digital human system is launched upon connection to the display device. This plug-and-play manner helps to improve the usage speed of the digital human system. Second, acquiring the three-dimensional model data and the human motion data of the digital human in the digital human system, decomposing the three-dimensional model data and the human motion data into the plurality of processing tasks through the rendering engine, transmitting the plurality of processing tasks to the preset graphics processing unit, acquiring the digital human image generated by the graphics processing unit based on the plurality of processing tasks, and sending the digital human image to the display device reduce manual setup and deployment steps for users, thereby simplifying the application process of the digital human system and helping to improve the application efficiency of the digital human system.

### BRIEF DESCRIPTION OF DRAWINGS

The drawings described herein are provided for further understanding of the present application and form a part of the present application. The illustrative embodiments and their descriptions of the present application are used to explain the present application and do not constitute an undue limitation on the present application. Some specific embodiments of the present application will be described in detail below with reference to the drawings in an exemplary rather than restrictive manner. Identical reference signs in the drawings denote identical or similar components or parts, and those skilled in the art should understand that these drawings are not necessarily drawn to scale. In the drawings:
FIG. 1 is a flowchart of a digital human system application method provided by an embodiment of the present application; and
FIG. 2 is a schematic block diagram of a digital human system application apparatus provided by an embodiment of the present application.

### DESCRIPTION OF EMBODIMENTS

To enable those skilled in the art to better understand the solutions of the present application, the technical solutions in the embodiments of the present application will be clearly and completely described below in conjunction with the drawings in the embodiments of the present application. It is apparent that the described embodiments are only a part of the embodiments of the present application, rather than all embodiments. Based on the embodiments in the present application, all other embodiments obtained by those of ordinary skill in the art without creative efforts shall fall within the scope of protection of the present application.

The digital human system application method provided by the embodiments of the present application can be applied to a portable device, where a portable device refers to an electronic device that is small in size, lightweight, and easy to carry and move.

The portable device is equipped with a general-purpose deep learning model, an inference chip, a graphics processing unit, a storage device, a data IO interface, and a power interface.

The deep learning model of a digital human is deployed in the storage device, and the inference chip performs inference operations for the deep learning model.

To ensure that the inference chip supports operators included in the trained deep learning model, the inference chip needs to adopt a general-purpose CPU architecture and GPU architecture.

The IO includes, but is not limited to, an HDMI interface, a USB interface, and an Ethernet interface.

The IO interface refers to an input/output interface.

The HDMI interface refers to "high definition multimedia interface" in English, and is a digital video/audio interface capable of transmitting both audio and video signals without requiring digital-to-analog or analog-to-digital conversion before signal transmission.

The USB interface refers to "universal serial bus" in English, and is a widely used interface standard for connecting external devices such as keyboards, mice, printers, and storage devices.

The Ethernet interface refers to "Ethernet interface" in English, and is an interface for network data connections and is one of the most widely used local area network communication methods.

An operating system of the portable device includes mounting scripts for the USB interface and the HDMI interface, where the mounting scripts are used to detect whether software deployed on the device includes a startup script.

The startup script is a code file containing content required to execute and load a pre-stored digital human system.

The display of a digital human relies on the graphics processing unit to provide high-quality graphics rendering capabilities. The graphics processing unit has significant advantages in graphics rendering, image processing, and modeling, enabling real-time processing of complex graphical data.

In the field of travel guidance, users can obtain local guide information and voice navigation services through digital human systems of portable devices.

In the field of personal assistance, users can carry digital human systems of portable devices for voice interaction to obtain personalized services such as schedule reminders and weather forecasts.

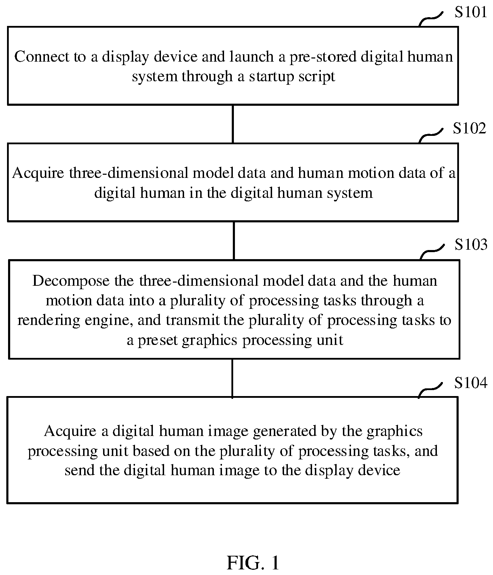

FIG. 1 is a flowchart of a digital human system application method provided by an embodiment of the present application. As shown in FIG. 1, the digital human system application method provided by the embodiment of the present application is applied to the aforementioned portable device, and the digital human system application method includes the following steps, detailed as follows:
S101: Connect to a display device and launch a pre-stored digital human system through a startup script.

In a possible implementation of the first aspect, the connecting to a display device and launching a pre-stored digital human system through a startup script includes:
acquiring, through an input/output interface, a hot-plug signal sent by the display device, where the input/output interface includes one or a combination of an HDMI interface, a USB interface, and an Ethernet interface;
establishing a data transmission channel between a portable device and the display device when the hot-plug signal is a high-level signal; and
launching the pre-stored digital human system through the startup script when the data transmission channel satisfies a preset condition.

In the embodiments of the present application, establishing the data transmission channel between the portable device and the display device ensures stable transmission of digital human images from the portable device to the display device, improving the efficiency and stability of digital human image transmission.

In a possible implementation of the first aspect, the launching the pre-stored digital human system through the startup script when the data transmission channel satisfies a preset condition includes:
acquiring a transmission delay duration of the data transmission channel, and launching the pre-stored digital human system through the startup script when the transmission delay duration is shorter than a preset delay duration in the preset condition;
or acquiring a transmission rate of the data transmission channel, and launching the pre-stored digital human system through the startup script when the transmission rate is greater than a preset rate in the preset condition.

In the embodiments of the present application, launching the pre-stored digital human system through the startup script when the data transmission channel satisfies the preset condition allows the digital human system to automatically avoid network congestion or unstable periods, effectively reducing adverse situations such as startup failures, data transmission interruptions, or delays caused by network issues, thereby enhancing the stability and reliability of the digital human system. From a user experience perspective, the transmission delay duration being less than the preset delay duration or the transmission rate being greater than the preset rate provides users with a smoother and faster data interaction experience, enhancing user satisfaction and loyalty.

S102: Acquire three-dimensional model data and human motion data of a digital human in the digital human system.

The acquiring three-dimensional model data and human motion data of a digital human in the digital human system includes:
acquiring a first file and a second file of the digital human system; and
acquiring the three-dimensional model data of the digital human from the first file, and acquiring the human motion data of the digital human from the second file.

In the embodiments of the present application, the digital human can be reconstructed through the three-dimensional model data and human motion data, ensuring that the digital human's motion performance is fully consistent with the digital human system. This real-time feedback mechanism not only enhances user experience but also improves the interactivity and immersion of the digital human.

S103: Decompose the three-dimensional model data and the human motion data into a plurality of processing tasks through a rendering engine, and transmit the plurality of processing tasks to a preset graphics processing unit.

The decomposing the three-dimensional model data and the human motion data into a plurality of processing tasks through a rendering engine, and transmitting the plurality of processing tasks to a preset graphics processing unit includes:
combining the three-dimensional model data and the human motion data into rendering data; and
decomposing a rendering task of the rendering data into a plurality of processing tasks through the rendering engine, and transmitting the plurality of processing tasks to the preset graphics processing unit.

In the embodiments of the present application, the graphics processing unit possesses powerful parallel computing capabilities, with numerous processing units and a plurality of stream processors provided internally. When the plurality of processing tasks are simultaneously sent to the graphics processing unit, these processing tasks can be executed in parallel on a plurality of processing units of the graphics processing unit. This parallel processing approach significantly improves computational efficiency, enabling the processing tasks that would otherwise take a long time to be processed in a shorter time, thereby accelerating the overall workflow.

S104: Acquire a digital human image generated by the graphics processing unit based on the plurality of processing tasks, and send the digital human image to the display device.

For example, the acquiring a digital human image generated by the graphics processing unit based on the plurality of processing tasks and sending the digital human image to the display device includes:
acquiring the digital human image generated by the graphics processing unit based on the plurality of processing tasks, decomposing content of the digital human image into image frames, and sending the image frames to the display device.

After receiving the digital human image, the display device displays the digital human image, presenting the appearance, movements, and expressions of the digital human to a user in a smooth manner.

The portable device may be connected directly to the display device or indirectly connected to the display device.

For ease of description, examples are provided as follows:
For instance, when only the display device is present, the portable device can be directly connected to the display device. In application, the HDMI interface of the portable device is connected to an HDMI interface of the display device, the Ethernet interface is connected to a network, and the power interface is connected to a power source. A mounting script of HDMI detects the startup script and launches the digital human system. The portable device transmits the digital human image of the digital human system to the display device through the HDMI interface, and the display device displays the digital human image of the digital human system.

For instance, when a computer is present, the portable device is connected to the computer, and the computer is connected to the display device, thus the portable device is indirectly connected to the display device. In application, the USB interface of the portable device is connected to the computer, the Ethernet interface is connected to a network, and the power interface is connected to a power source. A mounting script of the USB interface detects the startup script and launches the digital human system.

The portable device transmits the digital human image of the digital human system to the computer through the USB interface, the computer transmits the digital human image of the digital human system to the display device, and the display device displays the digital human image of the digital human system.

After the acquiring a digital human image generated by the graphics processing unit based on the plurality of processing tasks and sending the digital human image to the display device, the digital human system application method further includes:
step A: collecting user speech and converting the user speech into first text information;
inputting the first text information into a deep learning model, and acquiring second text information output by the deep learning model based on the first text information; and
converting the second text information into response speech, and sending the response speech to the display device.

For example, the converting the second text information into response speech and sending the response speech to the display device includes:
converting the second text information into the response speech, and sending the second text information and the response speech to the display device, so that the display device displays the second text information and plays the response speech.

In the embodiments of the present application, in the digital era, users expect interactions with display devices to be more natural and smooth. Broadcasting the response speech through the display device not only responds to the user speech but also provides feedback in a more humanized manner, enhancing user engagement and immersion.

The inputting the first text information into a deep learning model and acquiring second text information output by the deep learning model based on the first text information includes:
acquiring a model file of the deep learning model, and loading the deep learning model from the model file through a loading script; and
inputting the first text information into the deep learning model to acquire the second text information output by the deep learning model based on the first text information. In the embodiments of the present application, the model file serves as a carrier of the deep learning model, containing network parameters and structural information optimized during a training process of the deep learning model. These parameters and structural information form the basis for the deep learning model to perform predictions and inferences. By loading the model file, the deep learning model can quickly restore the complete state of the model without requiring time-consuming retraining. This improves the convenience and efficiency of applying the deep learning model.

After the acquiring a digital human image generated by the graphics processing unit based on the plurality of processing tasks and sending the digital human image to the display device, the digital human system application method further includes:
step B: acquiring an update command, acquiring update content from a server through the update command, and performing an update operation on the digital human system through the update content to obtain an updated digital human system.

In the embodiments of the present application, the updated digital human system typically possesses enhanced interaction capabilities. This includes more precise natural language processing technology, enabling the digital human to better understand users' intentions and emotions and provide more appropriate and humanized responses.

After the acquiring a digital human image generated by the graphics processing unit based on the plurality of processing tasks and sending the digital human image to the display device, the digital human system application method further includes:
step C: acquiring a push instruction, and executing the push instruction to push the digital human image to a preset database.

In the embodiments of the present application, the push instruction is executed to push the digital human image to the preset database, where the database serves as a persistent storage medium of data, and enables long-term storage of the digital human image on a disk, ensuring that the digital human image is not lost even in the event of system power failure or crash. This persistent storage mechanism provides strong assurance for the long-term preservation and reliability of digital human images.

Steps A, B, and C may be executed simultaneously, or steps A, B, and C may not be executed simultaneously.

For example, step A may be executed before or after steps B and C, step B may be executed before or after steps A and C, and step C may be executed before or after steps A and B. The specific execution order is not limited herein.

The embodiments of the present application provide beneficial effects in two aspects. First, connecting to the display device and launching the pre-stored digital human system through the startup script enables plug and play, as the pre-stored digital human system is launched upon connection to the display device. This plug-and-play manner helps to improve the usage speed of the digital human system. Second, acquiring the three-dimensional model data and the human motion data of the digital human in the digital human system, decomposing the three-dimensional model data and the human motion data into the plurality of processing tasks through the rendering engine, transmitting the plurality of processing tasks to the preset graphics processing unit, acquiring the digital human image generated by the graphics processing unit based on the plurality of processing tasks, and sending the digital human image to the display device reduce manual setup and deployment steps for users, thereby simplifying the application process of the digital human system and helping to improve the application efficiency of the digital human system.

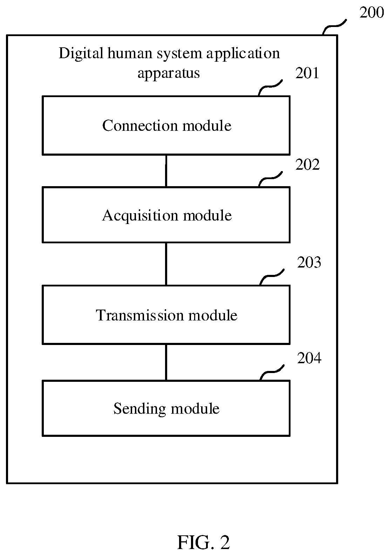

Corresponding to the digital human system application method described in the above embodiments, refer to FIG. 2. FIG. 2 is a schematic block diagram of a digital human system application apparatus provided by an embodiment of the present application. The digital human system application apparatus 200 shown in FIG. 2 can be applied to the aforementioned electronic device. The digital human system application apparatus 200 shown in FIG. 2 is elaborated below by using the electronic device as an example. The digital human system application apparatus 200 may include a connection module 201, an acquisition module 202, a transmission module 203, and a sending module 204.

The connection module 201 is configured to connect to a display device and launch a pre-stored digital human system through a startup script.

The acquisition module 202 is configured to acquire three-dimensional model data and human motion data of a digital human in the digital human system.

The transmission module 203 is configured to decompose the three-dimensional model data and the human motion data into a plurality of processing tasks through a rendering engine, and transmit the plurality of processing tasks to a preset graphics processing unit.

The sending module 204 is configured to acquire a digital human image generated by the graphics processing unit based on the plurality of processing tasks, and send the digital human image to the display device.

It should be noted that the embodiments in this specification are described in a progressive manner, with each embodiment focusing on differences from other embodiments, and identical or similar parts among the embodiments may be referred to each other.

The embodiments of the present application provide beneficial effects in two aspects. First, connecting to the display device and launching the pre-stored digital human system through the startup script enables plug and play, as the pre-stored digital human system is launched upon connection to the display device. This plug-and-play manner helps to improve the usage speed of the digital human system. Second, acquiring the three-dimensional model data and the human motion data of the digital human in the digital human system, decomposing the three-dimensional model data and the human motion data into the plurality of processing tasks through the rendering engine, transmitting the plurality of processing tasks to the preset graphics processing unit, acquiring the digital human image generated by the graphics processing unit based on the plurality of processing tasks, and sending the digital human image to the display device reduce manual setup and deployment steps for users, thereby simplifying the application process of the digital human system and helping to improve the application efficiency of the digital human system.

Finally, it should be noted that the above embodiments are only used to illustrate the technical solutions of the present application and not to limit them. Although the present application has been described in detail with reference to the foregoing embodiments, those of ordinary skill in the art should understand that modifications can still be made to the technical solutions described in the foregoing embodiments, or equivalent substitutions can be made to some or all of the technical features. Such modifications or substitutions do not cause the essence of the corresponding technical solutions to depart from the scope of the technical solutions of the embodiments of the present application.

## Claims

1. A digital human system application method, wherein the digital human system application method comprises:
connecting to a display device and launching a pre-stored digital human system through a startup script;
acquiring three-dimensional model data and human motion data of a digital human in the digital human system;
decomposing the three-dimensional model data and the human motion data into a plurality of processing tasks through a rendering engine, and transmitting the plurality of processing tasks to a preset graphics processing unit; and
acquiring a digital human image generated by the graphics processing unit based on the plurality of processing tasks, and sending the digital human image to the display device.

2. The digital human system application method according to claim 1, wherein the connecting to a display device and launching a pre-stored digital human system through a startup script comprises:
acquiring, through an input/output interface, a hot-plug signal sent by the display device, wherein the input/output interface comprises one or a combination of an HDMI interface, a USB interface, and an Ethernet interface;
establishing a data transmission channel between a portable device and the display device when the hot-plug signal is a high-level signal; and
launching the pre-stored digital human system through the startup script when the data transmission channel satisfies a preset condition.

3. The digital human system application method according to claim 2, wherein the launching the pre-stored digital human system through the startup script when the data transmission channel satisfies a preset condition comprises:
acquiring a transmission delay duration of the data transmission channel, and launching the pre-stored digital human system through the startup script when the transmission delay duration is shorter than a preset delay duration in the preset condition;
or acquiring a transmission rate of the data transmission channel, and launching the pre-stored digital human system through the startup script when the transmission rate is greater than a preset rate in the preset condition.

4. The digital human system application method according to claim 1, wherein the acquiring three-dimensional model data and human motion data of a digital human in the digital human system comprises:
acquiring a first file and a second file of the digital human system; and
acquiring the three-dimensional model data of the digital human from the first file, and acquiring the human motion data of the digital human from the second file.

5. The digital human system application method according to claim 1, wherein the decomposing the three-dimensional model data and the human motion data into a plurality of processing tasks through a rendering engine, and transmitting the plurality of processing tasks to a preset graphics processing unit comprises:
combining the three-dimensional model data and the human motion data into rendering data; and
decomposing a rendering task of the rendering data into a plurality of processing tasks through the rendering engine, and transmitting the plurality of processing tasks to the preset graphics processing unit.

6. The digital human system application method according to claim 1, after the acquiring a digital human image generated by the graphics processing unit based on the plurality of processing tasks and sending the digital human image to the display device, further comprising:
collecting user speech and converting the user speech into first text information;
inputting the first text information into a deep learning model, and acquiring second text information output by the deep learning model based on the first text information; and
converting the second text information into response speech, and sending the response speech to the display device.

7. The digital human system application method according to claim 6, wherein the inputting the first text information into a deep learning model and acquiring second text information output by the deep learning model based on the first text information comprises:
acquiring a model file of the deep learning model, and loading the deep learning model from the model file through a loading script; and
inputting the first text information into the deep learning model to acquire the second text information output by the deep learning model based on the first text information.

8. The digital human system application method according to claim 1, after the acquiring a digital human image generated by the graphics processing unit based on the plurality of processing tasks and sending the digital human image to the display device, further comprising:
acquiring an update command, acquiring update content from a server through the update command, and performing an update operation on the digital human system through the update content to obtain an updated digital human system.

9. The digital human system application method according to claim 1, after the acquiring a digital human image generated by the graphics processing unit based on the plurality of processing tasks and sending the digital human image to the display device, further comprising:
acquiring a push instruction, and executing the push instruction to push the digital human image to a preset database.

10. A digital human system application apparatus, comprising:
a connection module configured to connect to a display device and launch a pre-stored digital human system through a startup script;
an acquisition module configured to acquire three-dimensional model data and human motion data of a digital human in the digital human system;
a transmission module configured to decompose the three-dimensional model data and the human motion data into a plurality of processing tasks through a rendering engine, and transmit the plurality of processing tasks to a preset graphics processing unit; and
a sending module configured to acquire a digital human image generated by the graphics processing unit based on the plurality of processing tasks, and send the digital human image to the display device.
